# EUROPEAN PATENT SPECIFICATION

(11) **EP 4 203 259 B1**
(45) Date of publication and mention of the grant of the patent: **05.08.2026**
(21) Application number: 21217547.5
(22) Date of filing: 23.12.2021
(51) Int. Cl.: H02K 3/44, H02K 15/02, H02K 3/51, H02K 15/028

(54) **A ROTOR FOR A ROTARY ELECTRIC MACHINE**
ROTOR FÜR EINE ELEKTRISCHE DREHMASCHINE
ROTOR POUR UNE MACHINE ÉLECTRIQUE TOURNANTE

(43) Date of publication of application: 28.06.2023
(73) Proprietor: Valeo Electrification, 95892 Cergy Pontoise (FR)
(72) Inventor: Wolf, Nico, 97616 Bad Neustadt a.d.Saale (DE); Wieczorek, Christoph, 97616 Bad Neustadt a.d.Saale (DE); Siepker, Carsten, 97616 Bad Neustadt a.d.Saale (DE); Bach, Regina, 97616 Bad Neustadt a.d.Saale (DE); Schlereth, Alexander, 97616 Bad Neustadt a.d.Saale (DE)
(74) Representative: Valeo Powertrain Systems

(56) References cited:
- DE-A1- 19 500 603
- DE-B- 1 132 647
- US-B2- 9 859 766
- US-B2- 9 935 505

## Description

### FIELD OF THE INVENTION

The present invention belongs in particular to the field of rotary electric machines configured to be on board of an automotive vehicle, such as an electric vehicle or a hybrid vehicle. The vehicle can be of any type, such as a land, air or sea vehicle.

The present invention relates in particular to a rotor for a rotary electric machine.

### BACKGROUND OF THE INVENTION

As is known, an electric or a hybrid automotive vehicle presents an electric drive comprising a rotary electric machine which needs to be supplied with electric power, for instance by a high voltage power supply battery, to deliver a mechanical power in order to ensure propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, such as the wheels of the vehicle.

In particular, it is known to have the rotor separately excited using a field coil. This type of rotors is commonly referred as wound rotors or slip ring rotors. Such a rotor comprises a rotor body formed of a stack of laminations and has a plurality of teeth projecting radially. Then, the field coil is configured to be wound around each of the plurality of teeth.

A conventional solution for mounting the rotor body of the rotor shaft relies on having an outer circumference of the rotor shaft slightly higher than an inner circumference of the rotor body. Then, the rotor body is mounted on the rotor shaft by press-fitting.

A cover is provided to protect the field coil at its axial ends, said cover being mounted on the rotor shaft.

In known rotors, the rotor shaft and the cover have cylindrical circular profiles cooperating together by press-fitting. In such circular configuration, the press-fit mounting between the rotor shaft and the cover may happen to be insufficient during high-speed rotations, which can cause an accidental dissembling of the cover and the rotor shaft. Press-fit efforts must also be high enough to take into account some thermal shrinking effects. Such higher efforts may result in undesirable additional stresses.

DE 195 00 603 A1 discloses a fuel-pump electric motor whose armature winding heads are covered by caps clipped to insulation stars on the shaft, optionally with axial T-shaped ribs engaging armature lamination slots for improved fixation. US 9 935 505 B2 discloses a laminated stator/rotor core with thermoplastic slot insulations and an overmolded thermoplastic encapsulation that partially melts and fuses with the slot insulation, optionally via ribs or recesses, to seal and protect winding wires against aggressive liquids. US 9 859 766 B2 discloses a rotor end-bell for electric generators made at least partly of fiber-reinforced plastic, optionally with a metal spacer ring and threaded connection, to achieve high strength, low weight and good thermal/centrifugal behavior for high-speed turbo generators. DE 1 132 647 B discloses a securing device for rotor winding heads of high-speed electrical machines using a shrunk-on rotor cap whose ball-side end has a multi-start thread engaging a threaded rotor hub, providing combined radial shrink fit and axial clamping to prevent cap migration.

In this context, an objective of the present invention is to provide an improved assembly of the cover on the rotor shaft. Said cover is configured to protect the coil ends.

### SUMMARY OF THE INVENTION

The present invention concerns a rotor for a rotary electric machine, the rotor having an axis of rotation and comprising:
- a rotor shaft extending parallel to the axis of rotation,
- a rotor body mounted on the rotor shaft and having a plurality of teeth protruding radially,
- at least one field coil wound around the plurality of teeth, said field coil forming coil ends at axial ends of the teeth,
- at least one end plate configured to come against one axial end of the rotor body, such that to provide a mechanical holding of the rotor body,
- at least one cover mounted on the rotor shaft and configured to cover the coil ends, said cover having an axial portion being in contact with a predefined area of the rotor shaft and/or the end plate,
wherein said axial portion of the cover comprises at least one row of radial protrusions adapted to deform said predefined area of the rotor shaft and/or the end plate in order to ensure a fixation between the cover on one side and the rotor shaft and/or the end plate on the other side, wherein the hardness of the material composing the radial protrusions is higher than the hardness of the material composing said predefined area.

As a consequence, the deformation of the predefined area by the radial protrusions will create a solid fixation between the cover on one side and the rotor shaft and/or the end plate on the other side.

The invention offers the advantage of easy and cheaper assembly of the cover on the rotor shaft, and it is possible to avoid a thermal assembly. Hence, the manufacturing process and the in-service life of the rotor are improved.

Following embodiments and advantageous effects belong to the claimed invention, except where explicitly indicated that they are not covered by the present invention.

Advantageously, the fixation is a screw-connection type.

Advantageously, the radial protrusions are made of metal, such as aluminum, and the predefined area is made of plastic. Advantageously, the cover is made of the same material than the radial protrusion. Advantageously, the shaft is made of steel.

Advantageously, said axial portion of the cover is disposed at the outer or inner diameter of the cover.

Advantageously, the rotor comprises a first axial portion of the cover disposed at the outer diameter of the cover and a second axial portion of the cover disposed at the inner diameter of the cover. Preferably, the length of the first axial portion is higher than the second axial portion.

Advantageously, the radial protrusions are directed inwards.

Advantageously, the row of radial protrusions consists of radial protrusions arranged axially next to each other.

Advantageously, said axial portion of the cover comprises at least two, preferably at least four rows of radial protrusions.

According to an aspect of the invention, the cover is made of aluminum.

The invention also relates to a rotary electric machine for an electric or a hybrid vehicle, comprising a rotor as defined above. The rotary electric machine in particular comprises a stator, the stator surrounding coaxially the rotor.

An embodiment, not covered by the present invention, relates to a method for producing a rotor for a rotary electric machine, the rotor having an axis of rotation and comprising a rotor shaft extending parallel to the axis of rotation, a rotor body mounted on the rotor shaft and having a plurality of teeth protruding radially, at least one field coil wound around the plurality of teeth, said field coil forming coil ends at axial ends of the teeth and at least one end plate configured to come against one axial end of the rotor body, such that to provide a mechanical holding of the rotor body;
the method comprising the following steps:
i. mounting at least one cover on the rotor shaft to cover the coil ends, said cover having an axial portion comprising at least one row of radial protrusions,
ii. screwing the cover to put in contact said axial portion with a predefined area of the rotor shaft and/or the end plate and to deform said predefined area in order to ensure a fixation between the cover on one side and the rotor shaft and/or the end plate on the other side.

The invention also relates to an electric drive system comprising the rotary electric machine as defined above and an inverter configured to convert a direct current voltage coming from a high-voltage power supply battery into an alternating current voltage so as to drive the rotary electric machine. The AC voltage may be a multiphase AC voltage, especially a three-phase voltage.

The invention also relates to an electric or a hybrid vehicle, comprising the electric drive system for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of an automotive electric or hybrid vehicle comprising a rotary electric machine according to an embodiment of the invention;
Figure 2 is a schematic diagram of a rotor and a stator of the rotary electric machine of Figure 1;
Figure 3 is a schematic diagram in perspective of the rotor of Figure 2;
Figure 4 is a schematic diagram of a partial cut view of the rotor of Figure 3;
Figure 5 is a zoom of a specific area of the rotor of Figure 4
Figure 6 is a schematic diagram of a view along axis X of the cover according to another embodiment of the invention;
Figure 7 is a schematic diagram of a partial cut view of the cover of Figure 6;
Figure 8 is a schematic diagram of a partial cut view of the rotor according to another embodiment of the invention;
Figure 9 is a schematic diagram of a partial cut view of the rotor according to another embodiment of the invention.

### DETAILED DESCRIPTION

In the description and the claims, the terms "external" or "outer" and "internal or "inner" and the orientations "axial" and "radial" will be used to denote, according to the definitions given in the description, elements of the rotor, stator and/or electrical machine. By convention, the "radial" orientation is directed orthogonally to the axial orientation. The axial orientation relates, depending on the context, to the axis of rotation of rotor, stator and/or electrical machine. The "circumferential" orientation is directed orthogonally to the axial direction and orthogonally to the radial direction. The terms "external" or "outer" and "internal or "inner" are used to define the relative position of one element with respect to another, with respect to the reference axis, an element close to the axis thus being described as internal as opposed to an external element situated radially at the periphery.

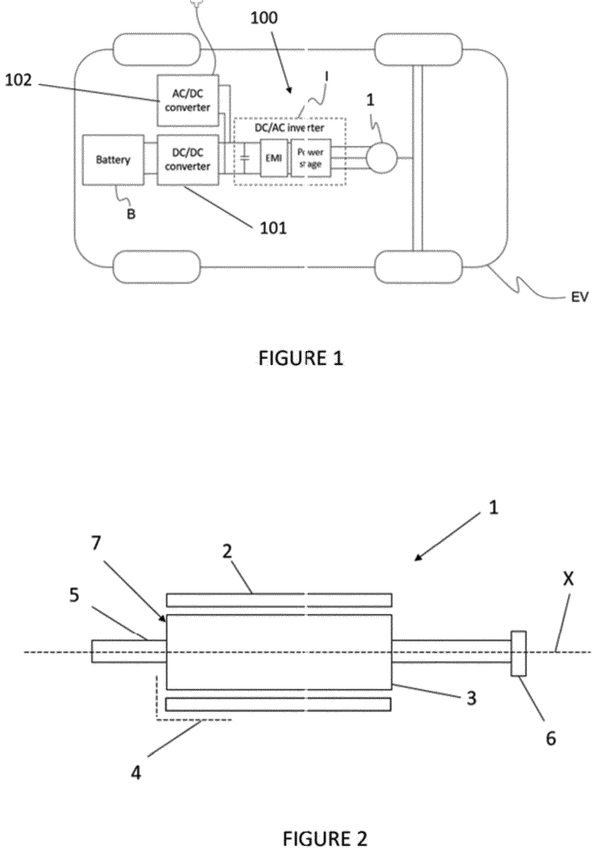

Figure 1 represents schematically an electric vehicle or a hybrid electric automotive vehicle EV comprising wheels and an electric drive system 100 configured to drive at least indirectly at least one of the wheels of the vehicle. The vehicle may comprise a high-voltage power supply battery B, preferably a rechargeable battery, for providing electric power to the electric drive.

The electric drive system 100 comprises a rotary electric machine 1 and an inverter I configured to convert a direct current (DC) voltage coming from the high-voltage power supply battery B into an alternating current (AC) voltage in order to drive the rotary electric machine 1. The rotary electric machine 1 may in particular be a three-phase rotary electric machine supplied with a three-phase AC voltage. A DC/DC converter 101 is provided between the battery B and the inverter I. An AC/DC converter 102 is provided between a network power supply and the inverter I in a known manner.

As illustrated in Figure 2, the rotary electric machine 1 comprises a stator 2, referring to the fixed part of the rotary electric machine, and a rotor 3, referring to the rotating part of the rotary electric machine. The stator 2 presents an annular shape and surrounds coaxially the rotor 3. The rotary electric machine 1 comprises a casing 4 covering the stator 2 and the rotor 3. In a known manner, the stator 2 comprises a stator body formed of a stack of laminations having a plurality of stator teeth projecting radially, and stator windings wound around the stator teeth.

The rotor 3 is a separately excited rotor, also commonly referred as a wound rotor or a slip ring rotor. In this type of rotor, the rotor comprises field coils connected to an external power supply through slip rings 6. The slip rings 6 correspond to electro-mechanical devices configured to allow the exchange of electric power between the field coils and the external power supply.

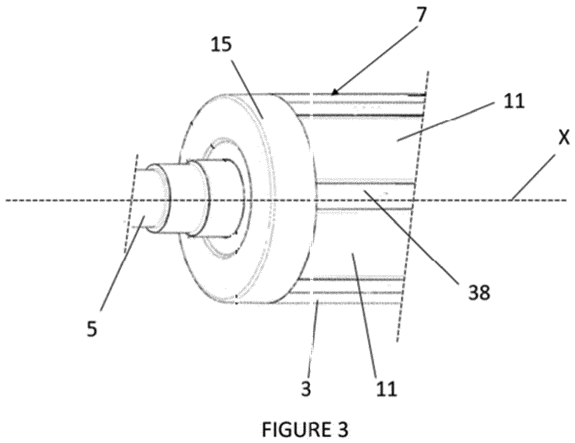

As illustrated in Figure 3, the rotor 1 comprises a rotor shaft 5 configured to rotate around an axis X of rotation, and a rotor body 7 being configured to be mounted on the rotor shaft 5. The shaft 5 is made of steel.

The rotor body 7 has a plurality of teeth 11 protruding radially.

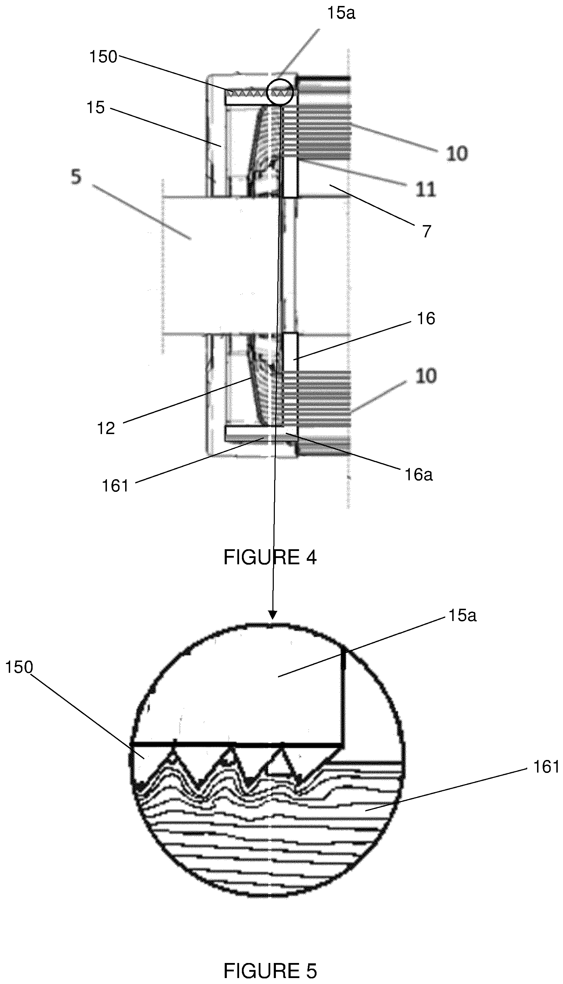

As visible on Figure 4, field coils 10 are wound around the plurality of teeth 11, said field coils 10 forming coil ends 12 at axial ends of the teeth 11.

Longitudinal inserts 38 are mounted between consecutive teeth 11.

Two covers 15 are mounted on the rotor shaft 5 and configured to cover the coil ends 12 on both axial ends of the rotor body 7. Only one cover 15 is visible on Figures 3 and 4. The other cover 15 is similar to the one shown on Figures 3 and 4. The covers 15 are made of metal such as aluminum.

As illustrated in Figure 4, the rotor 3 also comprises at least one end plate 16, preferably two end plates 16 configured to come against the two axial ends of the rotor body 7, such that to provide a mechanical holding of the rotor body 7, in particular of the stack of laminations. The two end plates 16, only one is represented, are especially located between the rotor body 7 and the coil ends 12 such that to electrically insulate the field coil from the rotor body 7.

On this embodiment, the cover 15 comprises an axial portion 15a disposed at the outer diameter of the cover. In other words, the axial portion 15a is disposed at the external edge of the cover 15.

The cover 15 comprises several rows of radial protrusions 150 (only one is represented on the figure 4). The radial protrusions 150 can be made in one piece with the cover 15. In another embodiment, the radial protrusions 150 can be fixed to the axial portion 15a. In the present invention, the radial protrusions 150 belongs to the cover 15.

The radial protrusions 150 are made of metal such as aluminum, preferably the same material than the one used for the cover 15.

The row of radial protrusions 150 consists of radial protrusions arranged axially next to each other.

The radial protrusions 150 are adapted to deform a predefined area 161 of the end plate 16. Here, the predefined area 161 is disposed on an external circumferential skirt 16a of the end plate 16. The radial protrusions 150 are directed inwards and sink into the predefined area 161 to deform it.

As we can see on Figure 5, the deformation of predefined area 161 ensure a fixation between the cover 15 and the end plate 16. Preferably, the fixation is a screw-connection type. The predefined area 161 will present after deformation a thread form.

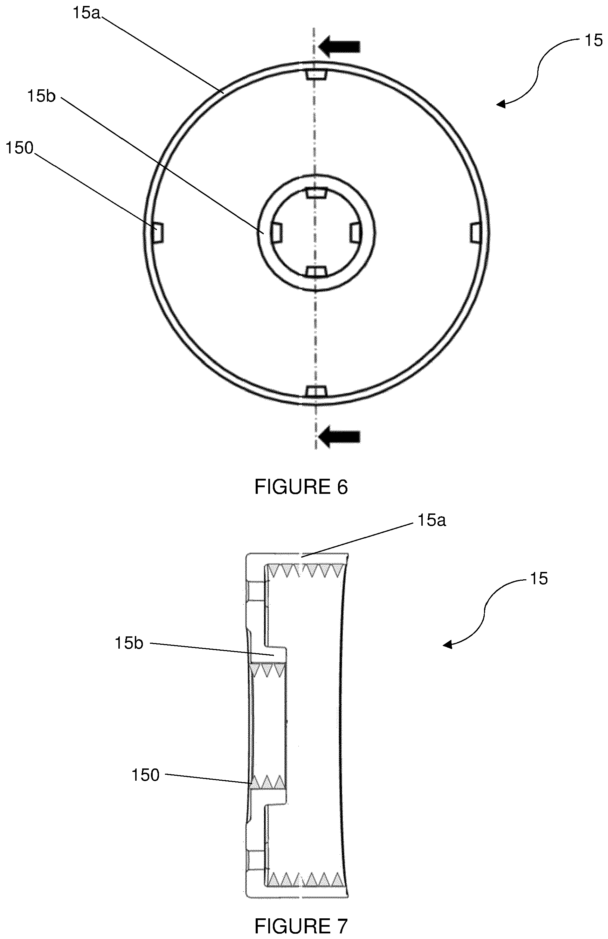

In another embodiment of the invention illustrated in Figures 6 and 7, the cover 15 comprises a first axial portion of the cover 15a disposed at the outer diameter of the cover 15 and a second axial portion of the cover 15b disposed at the inner diameter of the cover 15.

Each axial portion 15a, 15b comprises four rows of radial protrusions 150. The number of rows is adapted to the rotor and depends on the geometry and the realized tension/force of the machine.

The rows of radial protrusions are arranged circumferentially on the cover. The rows of radial protrusions are preferably distributed equi-angularly around the axis X.

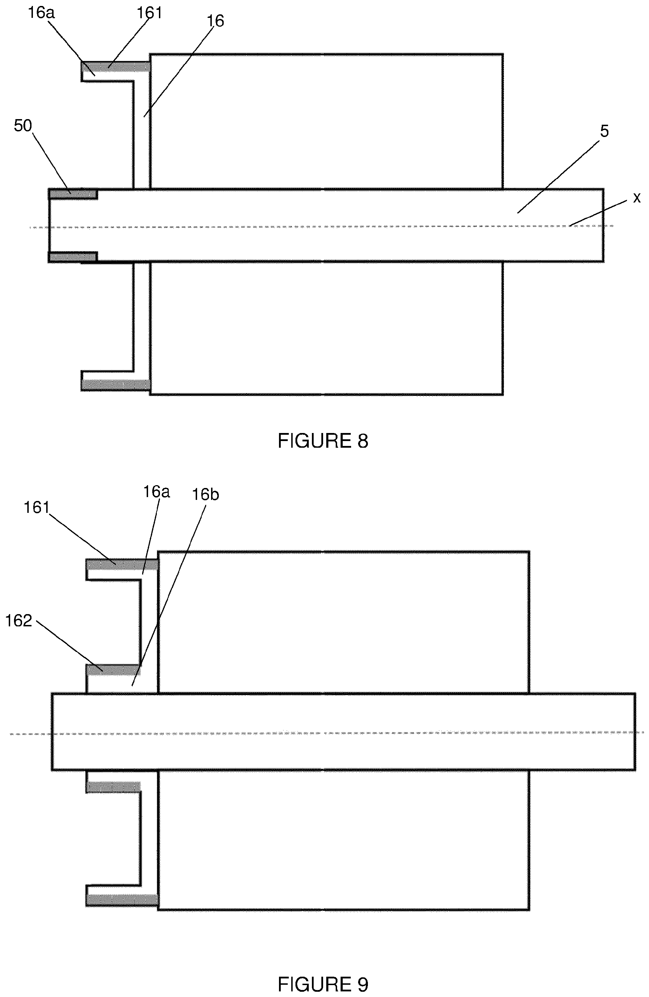

The complementary rotor 3 of the cover 15 of Figures 6 and 7 is illustrated on Figure 8. The cover 15 has a first axial portion 15a which will be in contact with a predefined area 161 disposed on the external circumferential skirt 16a of the end plate 16. The cover 15 also comprises a second axial portion 15b which will be in contact with a predefined area 50 disposed on the shaft 5, preferably on the outer edge of the shaft 5.

In the embodiment illustrated in Figure 9, the end plate 16 comprises a first predefined area 161 disposed on the external circumferential skirt 16a and a second predefined area 162 disposed on an internal circumferential skirt 16b.

The method, not covered by the present invention, for producing the rotor comprises the following step:
i. mounting at least one cover 15 on the rotor shaft to cover the coil ends, said cover having an axial portion 15a, 15b comprising at least one row of radial protrusions 150,
ii. screwing the cover to put in contact said axial portion 15a, 15b with a predefined area 50, 161, 162 of the rotor shaft 5 and/or the end plate 16 and to deform said predefined area 50, 160, 161 in order to ensure a fixation between the cover 15 on one side and the rotor shaft 5 and/or the end plate 16 on the other side.

## Claims

1. A rotor (3) for a rotary electric machine (1), the rotor (3) having an axis (X) of rotation and comprising:
- a rotor shaft (5) extending parallel to the axis of rotation (X),
- a rotor body (7) mounted on the rotor shaft (5) and having a plurality of teeth (11) protruding radially,
- at least one field coil (10) wound around the plurality of teeth, said field coil forming coil ends (12) at axial ends of the teeth,
- at least one end plate (16) configured to come against one axial end of the rotor body (7), such that to provide a mechanical holding of the rotor body (7),
- at least one cover (15) mounted on the rotor shaft and configured to cover the coil ends, said cover having an axial portion (15a, 15b) being in contact with a predefined area (50, 161, 162) of the rotor shaft (5) and/or the end plate (16),
**characterized in that** said axial portion of the cover (15a, 15b) comprises at least one row of radial protrusions (150) adapted to sink into and deform said predefined area (50, 161, 162) of the rotor shaft (5) and/or the end plate (16) in order to ensure a fixation between the cover (15) on one side and the rotor shaft (5) and/or the end plate (16) on the other side, wherein the hardness of the material composing the radial protrusions (150) is higher than the hardness of the material composing said predefined area (50, 161, 162).

2. The rotor (3) as claimed in the preceding claim, wherein the fixation is a screw-connection type.

3. The rotor (3) as claimed in any of the preceding claims, wherein the radial protrusions (150) are made of metal and the predefined area (50, 161, 162) is made of plastic.

4. The rotor (3) as claimed in any of the preceding claims, wherein said axial portion of the cover (15a, 15b) is disposed at the outer or inner diameter of the cover (15).

5. The rotor (3) as claimed in any of the preceding claims 1 to 3, comprising a first axial portion of the cover (15a) disposed at the outer diameter of the cover (15) and a second axial portion of the cover (15b) disposed at the inner diameter of the cover (15).

6. The rotor (3) as claimed in any of the preceding claims, wherein the radial protrusions (150) are directed inwards.

7. The rotor (3) as claimed in any of the preceding claims, wherein the row of radial protrusions (150) consists of radial protrusions arranged axially next to each other.

8. The rotor (3) as claimed in any of the preceding claims, wherein said axial portion of the cover (15a, 15b) comprises at least four rows of radial protrusions (150).

## Patentansprüche

1. Rotor (3) für eine elektrische Rotationsmaschine (1), wobei der Rotor (3) eine Drehachse (X) aufweist und umfasst:
- eine parallel zur Drehachse (X) verlaufende Rotorwelle (5),
- einen auf der Rotorwelle (5) montierten Rotorkörper (7) mit einer Mehrzahl von radial vorstehenden Zähnen (11),
- mindestens eine Feldspule (10), die um die Mehrzahl von Zähnen (11) gewickelt ist, wobei die Feldspule (10) an den axialen Enden der Zähne (11) Spulenenden (12) bildet,
- mindestens eine Endplatte (16), die so ausgebildet ist, dass sie an einem axialen Ende des Rotorkörpers (7) anliegt, um eine mechanische Halterung des Rotorkörpers (7) bereitzustellen,
- mindestens eine an der Rotorwelle montierte Abdeckung (15), die so ausgebildet ist, dass sie die Spulenenden abdeckt, wobei die Abdeckung einen axialen Abschnitt (15a, 15b) aufweist, der mit einem vorgegebenen Bereich (50, 161, 162) der Rotorwelle (5) und/oder der Endplatte (16) in Kontakt steht,
**dadurch gekennzeichnet, dass** der axiale Abschnitt der Abdeckung (15a, 15b) mindestens eine Reihe radialer Vorsprünge (150) umfasst, die so ausgelegt sind, dass sie in den vorgegebenen Bereich (50, 161, 162) der Rotorwelle (5) und/oder der Endplatte (16) eindringen und diesen verformen, um eine Befestigung zwischen einerseits der Abdeckung (15) und andererseits der Rotorwelle (5) und/oder der Endplatte (16) sicherzustellen,
wobei die Härte des Materials, aus dem die radialen Vorsprünge (150) bestehen, größer ist als die Härte des Materials, aus dem der vorgegebene Bereich (50, 161, 162) besteht.

2. Rotor (3) nach dem vorhergehenden Anspruch, wobei die Befestigung als Schraubverbindung ausgebildet ist.

3. Rotor (3) nach einem der vorhergehenden Ansprüche, wobei die radialen Vorsprünge (150) aus Metall bestehen und der vorgegebene Bereich (50, 161, 162) aus Kunststoff besteht.

4. Rotor (3) nach einem der vorhergehenden Ansprüche, wobei der axiale Abschnitt (15a, 15b) der Abdeckung (15) am Außen- oder Innendurchmesser der Abdeckung (15) angeordnet ist.

5. Rotor (3) nach einem der Ansprüche 1 bis 3, umfassend einen ersten axialen Abschnitt der Abdeckung (15a), der am Außendurchmesser der Abdeckung (15) angeordnet ist, und einen zweiten axialen Abschnitt der Abdeckung (15b), der am Innendurchmesser der Abdeckung (15) angeordnet ist.

6. Rotor (3) nach einem der vorhergehenden Ansprüche, wobei die radialen Vorsprünge (150) nach innen gerichtet sind.

7. Rotor (3) nach einem der vorhergehenden Ansprüche, wobei die Reihe radialer Vorsprünge (150) aus axial nebeneinander angeordneten radialen Vorsprüngen besteht.

8. Rotor (3) nach einem der vorhergehenden Ansprüche, wobei der axiale Abschnitt (15a, 15b) der Abdeckung (15) mindestens vier Reihen radialer Vorsprünge (150) umfasst.

## Revendications

1. Rotor (3) pour une machine électrique tournante (1), le rotor (3) présentant un axe de rotation (X) et comprenant :
- un arbre de rotor (5) s'étendant parallèlement à l'axe de rotation (X),
- un corps de rotor (7) monté sur l'arbre de rotor (5) et comportant une pluralité de dents (11) faisant saillie radialement,
- au moins une bobine de champ (10) enroulée autour de ladite pluralité de dents (11), ladite bobine de champ (10) formant des extrémités de bobine (12) au niveau des extrémités axiales des dents (11),
- au moins une plaque d'extrémité (16) conçue pour venir en appui contre une extrémité axiale du corps de rotor (7) afin d'assurer le maintien mécanique du corps de rotor (7),
- au moins un capot (15) monté sur l'arbre de rotor (5), conçu pour recouvrir les extrémités de bobine, ledit capot comportant une partie axiale (15a, 15b) qui est en contact avec une zone prédéfinie (50, 161, 162) de l'arbre de rotor (5) et/ou de la plaque d'extrémité (16),
**caractérisé en ce que** la partie axiale du capot (15a, 15b) comprend au moins une rangée de saillies radiales (150) conçues pour pénétrer dans la zone prédéfinie (50, 161, 162) de l'arbre de rotor (5) et/ou de la plaque d'extrémité (16) et la déformer, afin d'assurer une fixation entre, d'une part, le capot (15) et, d'autre part, l'arbre de rotor (5) et/ou la plaque d'extrémité (16),
la dureté du matériau constituant les saillies radiales (150) étant supérieure à celle du matériau constituant la zone prédéfinie (50, 161, 162).

2. Rotor (3) selon la revendication précédente, dans lequel la fixation est réalisée sous la forme d'un assemblage vissé.

3. Rotor (3) selon l'une des revendications précédentes, dans lequel les saillies radiales (150) sont en métal et la zone prédéfinie (50, 161, 162) est en plastique.

4. Rotor (3) selon l'une des revendications précédentes, dans lequel la partie axiale (15a, 15b) du capot (15) est disposée au niveau du diamètre extérieur ou intérieur du capot (15).

5. Rotor (3) selon l'une des revendications 1 à 3, comprenant une première partie axiale du capot (15a) disposée au niveau du diamètre extérieur du capot (15), et une deuxième partie axiale du capot (15b) disposée au niveau du diamètre intérieur du capot (15).

6. Rotor (3) selon l'une des revendications précédentes, dans lequel les saillies radiales (150) sont orientées vers l'intérieur.

7. Rotor (3) selon l'une des revendications précédentes, dans lequel la rangée de saillies radiales (150) est constituée de saillies radiales disposées axialement les unes à côté des autres.

8. Rotor (3) selon l'une des revendications précédentes, dans lequel la partie axiale (15a, 15b) du capot (15) comprend au moins quatre rangées de saillies radiales (150).
